# EUROPEAN PATENT APPLICATION

(11) **EP 1 585 281 A1**
(43) Date of publication of application: **12.10.2005**
(21) Application number: 04008495.6
(22) Date of filing: 07.04.2004
(51) Int. Cl.: H04L 29/06, H04L 12/58

(54) **A method and arrangements for dynamically reconfiguring a presence enabled application framework within a communication network**

(71) Applicant: SIEMENS AKTIENGESELLSCHAFT, 80333 München (DE)
(72) Inventor: Biot, Olivier, 2650 Edegem (BE); Goeman, Stefan, 2640 Mortsel (BE); Hauptvogel, Andreas, 12103 Berlin (DE); Moons, Jos, 3140 Keerbergen (BE)

(57) **Abstract**

A method and arrangements for dynamically reconfiguring a Presence Enabled Application Framework within a communication network

The present invention relates to a method and arrangements for dynamically reconfiguring a Presence Enabled Application Framework within a communication network comprising a client side on a Terminal Equipment (PET) and a server side within a Presence Enabled Network (PEN), wherein each side contains communication means for inter-communication between them. It is an aspect of the invention to use a method or to provide means for the steps of:
a) registering a Presence Enabled Application (PEA) to a Presence Enabled Network (PEN),
b) which notifies the terminal equipment (PET) of availability of the Presence Enabled Application (PEA),
c) wherein the terminal equipment (PET) queries the Presence Enabled Network (PEN) which in turn transmits a response concerning the Presence Enabled Application (PEA).

This invention is particularly used in the mobile telecommunication field.

## Description

A method and arrangements for dynamically reconfiguring a Presence Enabled Application Framework within a communication network

The present invention relates to a method and arrangements for dynamically reconfiguring a Presence Enabled Application Framework within a communication network comprising a client side on a terminal equipment and a server side within a Presence Enabled Network, wherein each side contains communication means for inter-communication between them.

This invention is particularly used in the mobile telecommunication field. There are solutions in the domain of Instant Messaging and Presence, either restricted to the fixed networks or the mobile networks, or valid for both network technologies. Most of them describe and define already standardized solutions, which almost always only discuss the usage of the existing IM and Presence system, assuming it is a frozen framework.

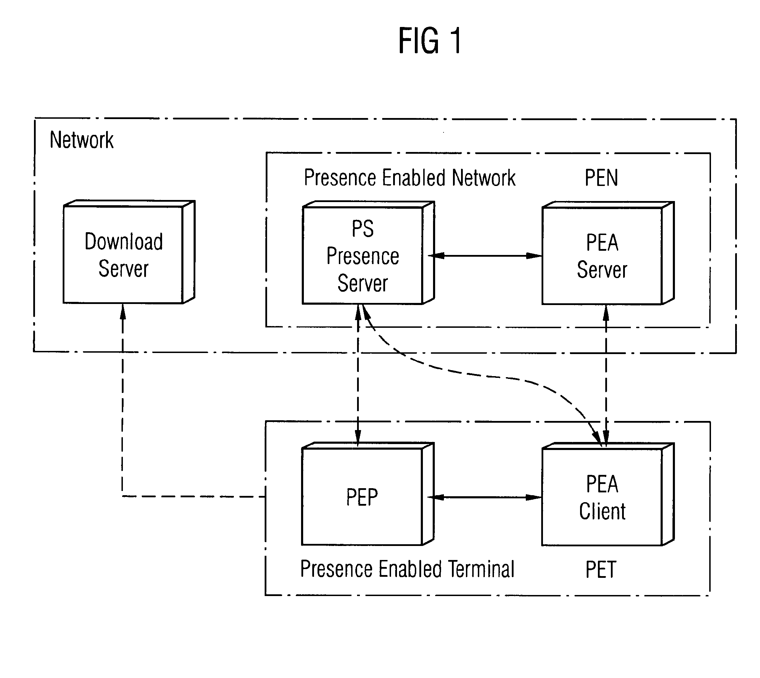

A typical network architecture - e.g. as shown in figure 1 - consists of a Presence Enabled Terminal PET and a Presence Enabled Network PEN. The PEN contains a Presence Server PS, one or more PEA Servers and a Download Server. The PET contains the Presence Enabled Phonebook PEP and one or more PEA Clients.

A Presence Enabled Application PEA is characterized by the fact that it consumes and/or produces presence information. A PEA may also define a communication means. Additionally, a PEA will create one or more communities of people sharing the PEA or sharing parts of it, as it can be deduced from a game service where each game level can represent a community.

A typical PEA is the Instant Messaging service, or the Push-to-Talk service, or an on-line game. One can also see the Presence Enabled Phonebook as such a PEA. It is likely that many other PEAs will emerge in the near future. They include time management tools (calendars, meeting schedulers and the likes), leisure applications (games), communication means etc.

It is believed that many more PEAs will reach the end-user, and that each new PEA may want to define dedicated presence information which will be controlled by Presence Servers.

A PEA typically consists of a client side and a server side. Both can interact with a presence service, either directly or indirectly. The client side of the PEA runs on the Terminal, and the server side in the network. In order to install a PEA on a Terminal, there will be a Download Server somewhere in the network.

Today a Presence-enabled network consists of a static framework in which static, known applications are defined together with the communication means they implement and/or require. Since the current Presence network does not define a means for modifying its framework in a standardized manner, manufacturers and vendors must define themselves proprietary means of dealing with the added functionality.

It is therefore an object of the present invention to develop a method and arrangements to overcome the above mentioned disadvantages.

This object is achieved by a method and arrangements for dynamically reconfiguring a Presence Enabled Application Framework within a communication network using the steps and the arrangements which are mentioned in the independent claims. Further advantageous embodiments of the invention are described in the dependent claims.

The communication network comprises a client side on a Terminal Equipment and a server side within a Presence Enabled Network, wherein each side contains communication means for inter-communication between them.

It is an aspect of the invention to use a method or to provide means for the steps of:
a) registering a Presence Enabled Application to a Presence Enabled Network,
b) which notifies the terminal equipment of availability of the Presence Enabled Application,
c) wherein the terminal equipment queries the Presence Enabled Network which in turn transmits a response concerning the Presence Enabled Application.

A further aspect of the invention is a server suitable to perform the above mentioned method, comprising
- means for registering a Presence Enabled Application,
- means for notifying a terminal equipment of availability of a Presence Enabled Application, and
- means for responding to a query concerning the Presence Enabled Application.

A further aspect of the invention is a Presence Enabled Application Client suitable to perform the above mentioned method, comprising
- means for registering a Presence Enabled Application and
- means for receiving notification concerning the Presence Enabled Application.

A further aspect of the invention is a Presence Enabled Phonebook suitable to perform the above mentioned method, comprising
- means for activating sharing the Presence Enabled Application among several terminal equipments or end-users using a terminal equipment.

Practically this means that new presence enabled applications can be introduced without additional configuration activities from Operator side. In addition, clients that support the concepts described in this patent application will be able to support the new introduced presence enabled applications.

**For Application Service Providers** the proposed solution allows the usage of existing Presence networks and avoids the need for proprietary presence subsystems, hence reducing the deployment cost and effort.

**For Operators** this solution lowers the barrier for launching new Presence Enabled Applications by defining an extension framework and extension mechanisms that aim for easy maintenance and reuse of the existing Presence-enabled network components.

**For the end-users** this solution provides an extensible presence-aware environment and hides its complexity via the buddy list (presence enabled phonebook).

This solution allows a Presence-Enabled Network (PEN) to be dynamically reconfigured and updated according to the introduction, modification and withdrawal of a PEA.

The solution also foresees the situation in which an end-user having a PEA whose presence information is not known by the Presence Server publishes it or requests the Presence Server to perform an operation initiated by it.

Additionally, the solution proposes two mechanisms for negotiating the retrieval of the client part of the PEA for installation on the Terminal.

The solution suggests that the Presence-Enabled Phonebook (PEP) plays an essential role as enabler GUI for accessing and managing PEAs on the end-user's (Mobile) Terminal.

In the following, the present invention will be described in greater detail on the basis of preferred embodiments with reference to the accompanying drawings, in which:
Figure 1 shows a principle diagram of the above mentioned network architecture and
Figure 2 shows an example for an extensible presence architecture. Arrows indicate the direction of the communication. Dashed arrows indicate communication between client and server.

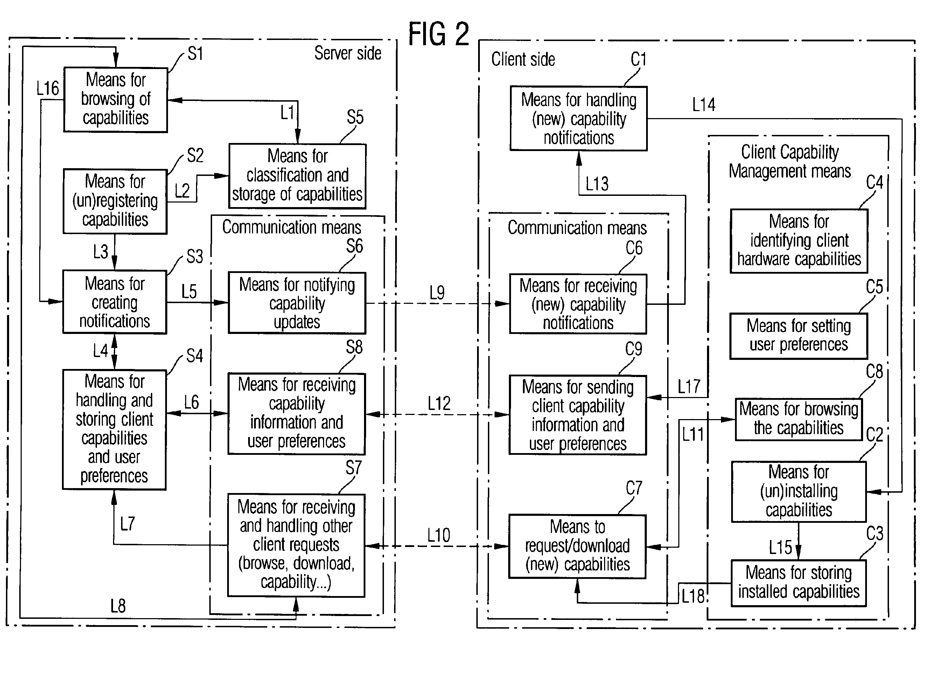

The left of Figure 2 represents the server side of the extensible presence framework.

The right of Figure 2 represents the client side of the extensible presence framework.

### Example deployment scenario

A typical deployment scenario for a new PEA consists in the initial registration of the PEA in the PEN. Once this has been performed, the end-users can start using the PEA if they download, install and register the PEA client on their Terminal. Through click-to-share a PEA can easily spread over the entire community served by a PEN. In this situation, the originating end-user wants to invite one or more of this end-user's buddies to use a PEA they haven't installed yet. Additionally, click-to-install allows easy installation of a PEA by means of the PEP which presents a PEA either directly or in association with a buddy which has shown the desire to share the knowledge that this PEA is installed on this buddy's Terminal. Finally, click-to-uninstall similarly allows easy removal of a PEA client on an end-user's Terminal.

In order to guarantee a positive end-user experience, it is essential that the end-user is shielded from the inherent complexity of Presence and updates in the presence architecture. This is the reason why we see the Presence Enabled Phonebook as a central player to the end-user as a GUI to Presence and PEAs and as an interface to PEAs.

This interface allows click-to-share, click-to-install and click-to-uninstall scenarios, and provides easy and friendly interworking with the PEAs.

The use cases that describe this invention are listed in a non-chronological manner in the following sections.

### Registering a PEA

In order to use the services offered by a PEA, the latter must be registered. This registration is required both in the PEN (for deployment) and on the Terminal of every end-user wishing to use the service(s) offered by this PEA.

### Register a PEA in the PEN

1. Registration of a PEA to a PEN is initiated by using the Means [S2] for (un)registering capabilities. This action is typically taken by an administrator.
2. As part of a successful registration the PEA the Means [S2] for (un)registering capabilities will signal the Means [S5] for classification and storage of capabilities on Line [L2]. The Means [S5] for classification and storage of capabilities will classify and store the PEA.
3. Further the new PEA is announced to the Terminal. Several ways, which are discussed in usage case "Announcing a new PEA" are possible.

### Register a PEA in the Terminal

1. After a successful installation the new PEA is registered in the device by the Means [C3] for storing installed capabilities which is triggered on Line [L15]. Via Line [L17] the Means [C9] for sending client capability information and user preferences the new PEA is registered in the PS.
2. Finally the Terminal retrieves the PEA-related presence information from the PS for the buddies in the buddy list, and updates the PEP accordingly. These means are not shown in Figure 2 as they are part of a regular IMPS client.

### Announcing a new PEA

There are several ways of announcing a new PEA to an end-user:
o The Terminal may query the PS for new PEAs.
o The Presence Server may inform the Terminal for a new PEA.
o An external trigger not covered by the previous scenarios informs the Terminal that a new PEA may be available.
   As an example, an IM, or a SMS message or some signalling message can be sent to the Terminal. Upon receiving this trigger, the Terminal may decide to query the PS for new PEAs. In another scenario, the message delivered to the Terminal contains sufficient information for the Terminal to announce the new PEA to the end-user.

### Terminal queries PS for a new PEA

1. The process of querying for a new PEA is initiated by the Means [C8] for browsing the capabilities, which will trigger the Means [C7] to request/download (new) capabilities on Line [L11]. Either the End-User may manually request for information on new capabilities, or the device may initiate the process automatically by a polling mechanism.
2. The request is signalled on Line [L10] and received by the Means [S7] for receiving and handling other client requests.
3. The Means [S7] for receiving and handling other client requests signals the Means [S1] for browsing of capabilities on Line [L8].
4. If a new PEA is found, the Means [S1] for browsing of capabilities signals the Means [S3] for creating notifications via Line [L16] for creating a notification to send to the terminal. On creation of the notification the Means [S4] for handling and storing client capabilities and user preferences is used via Line [L4] to (optionally) check if the Terminal is capable of handling the new PEA. If no new PEA is found, then the Server will issue an appropriate notification from the Means [S1] for browsing of capabilities over Line [L16] to the Means [S3] for creating notifications.
5. Finally the notification is passed via Line [L5] to the Means [S6] for notifying capability updates, which distributes it to the Terminal on Line [L9].
6. On reception of a notification the Means [C6] for receiving (new) capability notifications passes it to the Means [C1] for handling (new) capability notifications on Line [L13]. The Means [C1] for handling (new) capability notifications is responsible for announcing the new PEA to the End-User who has to make the decision whether to install the PEA or not.
7. Further installation of the PEA on the Terminal is handled by the usage case described in "Download and install a PEA in the Terminal".

### PS informs Terminal of a new PEA

1. The Means [S3] for creating notifications is signalled by the Means [S2] for (un)registering capabilities on Line [L3]. Via Line [L4] the Means [S3] for creating notifications makes use of the Means [S4] for handling and storing client capabilities and user preferences, which (optionally) checks if the Terminal is capable of handling the new PEA.
2. Once the notification is created by the Means [S3] for creating notifications, the Means [S6] for notifying capability updates is signalled on Line [L5]. The Means [S6] for notifying capability updates is responsible for distributing the notification to the Terminals. The notification is distributed on Line [L9].
3. The terminal receives the notification using the Means [C6] for receiving (new) capability notifications on Line [L9].
4. On reception of a notification the Means [C6] for receiving (new) capability notifications passes it to the Means [C1] for handling (new) capability notifications on Line [L13]. The Means [C1] for handling (new) capability notifications is responsible for announcing the new PEA to the End-User who has to make the decision whether to install the PEA or not.
5. Further installation of the PEA on the Terminal is handled by the usage case described in "Download and install a PEA in the Terminal".

### Terminal is informed by an external trigger

This usage case is the same as the previous one, but the trigger mechanism is external to the PEN.

### Sharing a PEA

The End-User of a Terminal may decide to share a PEA with one or more buddies from his buddy list. This can be achieved by selecting the PEA from within the PEP and then by selecting the "Share this application with X" option in a context menu. The scenario is described for one buddy. However it can be easily extended to handle more than one buddy:
1. The functionality to provide sharing of a PEA is probably integrated in the PEP ("Share this application with X"). When an end user wants to share a PEA with one or more buddies he needs to activate it. As it is part of the PEP, the means for activating the action are not explicitly shown in Figure 2, however one may argue it is part of the Means [C5] for setting user preferences as it could be seen as a user preference setting.
2. On the request to share a PEA with another buddy the Means [C9] for sending client capability information and user preferences is triggered via Line [L17].
3. The Terminal will send a notification to the Presence Server using the Means [C9] for sending client capability information and user preferences on Line [L12]. At the server this notification is received by the Means [S8] for receiving capability information and user preferences which signals the Means [S4] for handling and storing client capabilities and user preferences on Line [L6].
4. For the target buddy, either scenario "PS informs Terminal of a new PEA" or "Terminal is informed by an external trigger" applies.
5. The PEP is notified that the receiving buddy successfully installed and registered the new PEA. This automatic subscription must be possible.

### Download and install the PEA on the Terminal

In order to use the PEA on the Terminal, the appropriate PEA client software image must be downloaded from the Download Server, and the downloaded software image must be installed on the Terminal.
1. If the End-User decided to install the PEA, the Means [C1] for handling (new) capability notifications signals the Means [C2] for (un)installing capabilities on Line [L14] and the installation phase will start. During the installation phase the Means [C7] to request/download (new) capabilities is signalled on Line [L18].
2. Optionally the Terminal and the Download Server perform a capability negotiation as described in "Negotiate the retrieval of the PEA client software".
3. Upon successful download the retrieved software image is installed on the Terminal.
4. After successful installation, the PEA client is registered as described in "Register a PEA in the Terminal".

### Negotiate the retrieval of the PEA client software

It is essential in extensible frameworks that the installation and removal of software components be possible in a simple yet reliable and manageable manner. The present invention proposes two options, which can even be applied together, although this is not mandated.
Installing and removing a PEA requires management of capabilities in various domains (e.g., presence, device layer, battery status).
When a PEA will be offered to the Terminal, some negotiation will occur between the Terminal and the network in a so-called dialog.
On the Terminal side, the Means [C4] for identifying client hardware capabilities can be used for determining whether the requirements from the PEA can be met by the Terminal.
The installation and the dialogs themselves are not within the scope of this patent application.

### Presence Server based negotiation

One possibility is to base the negotiation on a client capability negotiation dialog between the Terminal and the Presence Server. The latter plays a privileged role and hence is a privileged partner in the decision dialog for negotiating a PEA client software image for a given Terminal given its capabilities.

### Download Server based negotiation

Another possibility is to let the Download Server negotiate the PEA client image with the Terminal.

### Uninstall a PEA

Two parties can initiate the process of removing a PEA from the PEN. Either, when a PEA is no longer offered as a service, the Administrator of the system can remove the PEA from the PEN. This action clearly has effect on all users who are registered to the PEA. Alternatively the End-User may decide to remove the PEA from the Terminal. The two alternatives trigger different actions and both are described below.

### By an Administrator

The process of removing a PEA from the PEN is very much like the process of Registering a PEA to a PEN. The main difference is that no retrieval of the PEA is involved.
1. Deregistration of a PEA is initiated by using the Means [S2] for (un)registering capabilities.
2. On deregistration of a PEA the Means [S5] for classification and storage of capabilities is signalled on Line [L2] to actually remove the PEA from the PEN. Further all users are automatically unsubscribed of the service.
3. Further the Means [S2] for (un)registering capabilities signals the Means [S3] for creating notification on Line [L3]. A notification is created to inform the Terminal that the PEA no longer can be used. During this action the invention may check with the PS to see which End-Users are subscribed to the PEA. This is not explicitly shown in Figure 2.
4. Once the notification is created it is passed via Line [L5] to the Means [S6] for notifying capability updates which distributes the notification to the Terminals via Line [L9].
5. The terminal receives the notification by the Means [C6] for receiving (new) capability notifications which passes it to the Means [C1] for handling (new) capability notifications on Line [L13]. The End-User will be notified that the PEA is no longer available for use. Further he has the option to uninstall the software image for the PEA.
6. On a positive decision the Means [C1] for handling (new) capability notifications signals the Means [C2] for (un)installing capabilities on Line [L14].
7. The PEA is further deregistered in the Terminal by the Means [C3] for storing installed capabilities which is triggered via Line [L15], and the PEP is updated.

### By the End-User

1. Removal by the End-User is initiated by using the Means [C2] for (un)installing capabilities. Any binaries used by the PEA which are not shared with other PEAs are removed.
2. Via Line [L15] the Means [C3] for storing installed capabilities is signalled, which is responsible for deregistering the PEA in the Terminal.
3. On a successful deregistration and removal in the Terminal the Means [C9] for sending client capability information and user preferences is signalled on Line [L17]. The Means [C9] for sending client capability information and user preferences is responsible for notifying the PS that the Terminal no longer supports the PEA.
4. The notification is sent on Line [L12]. The reception of the notification is handled by the Means [S8] for receiving capability information and user preferences and the notification is passed to the Means [S4] for handling and storing client capabilities and user preferences on Line [L6].
5. The Means [S4] for handling and storing client capabilities and user preferences is responsible for deregistering the End-User at the server-side. Furthermore, other End-Users which were subscribed to the notifications generated by the End-User who has removed the PEA from his Terminal are automatically unsubscribed.

Via Line [L4] the Means [S3] for creating notifications may be signalled to create a notification for other End-Users to inform that their buddy has removed the PEA. The notification is passed on Line [L5] to Means [S6] for notifying capability updates.

## Claims

1. A method for dynamically reconfiguring a Presence Enabled Application Framework within a communication network comprising a client side on a terminal equipment (PET) and a server side within a Presence Enabled Network (PEN), wherein each side contains communication means for inter-communication between them, **characterized in that**,
a) registering a Presence Enabled Application (PEA) to a Presence Enabled Network,
b) which notifies the terminal equipment (PET) of availability of the Presence Enabled Application (PEA),
c) wherein the terminal equipment queries the Presence Enabled Network (PEN) which in turn transmits a response concerning the Presence Enabled Application (PEA).

2. A method according to claim 1, wherein several terminal equipments or end-users using a terminal equipment (PET) within the communication network share the Presence Enabled Application (PEA).

3. A method according to claim 1 or 2, wherein reconfiguring the Presence Enabled Application (PEA) means introducing.

4. A method according to claim 1 or 2, wherein reconfiguring the Presence Enabled Application (PEA) means modifying.

5. A method according to claim 1 or 2, wherein reconfiguring the Presence Enabled Application (PEA) means removing.

6. A method according to claim 5, wherein registering in step a) of claim 1 is replaced with unregistering.

7. A method according to claim 6, wherein the communication network is represented by a mobile communication network.

8. A Server (PS, PEA Server) suitable to perform the method according to any one of the preceding claims, comprising
- means for registering a Presence Enabled Application (PEA),
- means for notifying a terminal equipment (PET) of availability of a Presence Enabled Application (PEA), and
- means for responding to a query concerning a Presence Enabled Application (PEA).

9. A Presence Enabled Application Client suitable to perform the methods according to any one of the claims 1 to 7, comprising
- means for registering a Presence Enabled Application (PEA) and
- means for receiving notification concerning the Presence Enabled Application (PEA).

10. A Presence Enabled Phonebook (PEP) suitable to perform the methods according to any one of the preceding claims, comprising
- means for activating sharing the Presence Enabled Application (PEA) among several terminal equipments or end-users using a terminal equipment (PET).

11. A Presence Enabled Terminal (PET) comprising the Presence Enabled Phonebook (PEP) and the Presence Enabled Application Client according to the claims 9 and 10.
